# EUROPEAN PATENT APPLICATION

(11) **EP 4 530 463 A1**
(43) Date of publication of application: **02.04.2025**
(21) Application number: 23200704.7
(22) Date of filing: 29.09.2023
(51) Int. Cl.: F03D 1/06, F03D 7/02, F03D 80/70

(54) **WIND TURBINE BLADE WITH A BEARING COVER, METHOD FOR MANUFACTURING A WIND TURBINE BLADE AND WIND TURBINE**

(71) Applicant: Siemens Gamesa Renewable Energy A/S, 7330 Brande (DK)
(72) Inventor: Karanasiou, Konstantina, 9000 Aalborg (DK); Krishnan, Aravind, 9000 Aalborg (DK); Rokohl, Simon Groenlund, 9000 Aalborg (DK)
(74) Representative: SGRE-Association

(57) **Abstract**

The invention relates to a wind turbine blade (1) for a wind turbine (2), comprising a root section (3) for attaching the wind turbine blade (1) to a blade bearing of a wind turbine hub (4) of the wind turbine (2), a tip section (5), an intermediate section (6), interposed between the root section (3) and the tip section (5) and a bearing cover (7), attached to the root section (3) for shielding a gap between the wind turbine hub (4) and the wind turbine blade (1) in an assembled state of the wind turbine blade (1) to the wind turbine hub (4). The bearing cover (7) is fixed to the wind turbine blade (1) by an adhesive layer of a first adhesive. The invention further relates to a method for manufacturing a wind turbine blade (1) and a wind turbine (2).

## Description

The present invention relates to a wind turbine blade with a bearing cover. The invention also relates to a method for manufacturing a wind turbine blade and to a wind turbine.

For wind turbines, it is known that between the wind turbine hub and the wind turbine blade, a gap is existent. Behind the gap, a blade bearing for the wind turbine blade is provided. These bearings are also denoted as *"pitch bearings".* The blade bearing is metallic and includes lubricants. In order to increase the lifetime of the blade bearing and to reduce the necessity for inspections and revisions, the blade bearing should be protected from environmental influences, such as rain, dust or the like.

For this purpose, the gap must be protected by a protection device. A common protection device is configured as a bearing cover, which is mounted on the wind turbine blade to shield the gap. The bearing cover also captures grease flowing out from the bearing and thus protects the blade coating of the wind turbine blade from damage.

For attaching the bearing cover to the wind turbine blade, several methods are known. According to a common solution, the bearing cover is fixed to the wind turbine blade by bolts. For this purpose, screw holes must be drilled into the root section of the wind turbine blade. However, especially the root section of the wind turbine blade requires a structural integrity to sustain high loads and moments. During the lifetime of the wind turbine blade, the bolts and screw holes are exposed to these loads and moments, which is resulting in cracks and final failure of the wind turbine blade.

The Document WO 2021/121497 A1 discloses a bearing cover for a wind turbine blade. The bearing cover consists of a plurality of bearing cover segments, clamped together and to the wind turbine blade by a plurality of tensioning bands with end brackets, bolts and nuts. For this purpose, the end brackets of adjacent tensioning bands are bolted together, wherein the tensioning bands are tightened by tightening the bolts with respective nuts.

A considerably setback, which is present for solutions with screw holes drilled into the root section and tensioning bands, is related to an ovalization of the wind turbine blade. Due to their own weight, wind turbine blades, which are resting on the ground, tend to slightly change their cross-section shape from round to oval. This effect is known as ovalization. Ovalization will result in additional stresses on bolts, screw holes and the tension band, especially when the wind turbine blade is in operation and round-shaped again.

It is therefore the object of the present invention to eliminate or at least partially eliminate the disadvantages described above in the case of a wind turbine. In particular, it is the object of the present invention to create a wind turbine blade for a wind turbine, a method for manufacturing a wind turbine blade and a wind turbine, which provide for a secure and long lasting attachment of the bearing cover to the wind turbine blade in a simple and inexpensive manner.

The above object is achieved by the claims. Accordingly, the problem is solved by a wind turbine blade for a wind turbine with the features of independent claim 1, by a method for manufacturing a wind turbine blade for a wind turbine according to subsidiary claim 9 and by a wind turbine according to subsidiary claim 15. Further features and details of the invention emerge from the subclaims, the description and the drawings. Features and details that are described in connection with the wind turbine blade according to the invention naturally also apply in connection with the method for manufacturing a wind turbine blade according to the invention as well as the wind turbine according to the invention and vice versa, so that with regard to the disclosure of the individual aspects of the invention, reference is or can always be made to each other.

According to a first aspect of the invention, the object is achieved by a wind turbine blade for a wind turbine. The wind turbine blade comprises a root section for attaching the wind turbine blade to a blade bearing of a wind turbine hub of the wind turbine, a tip section, an intermediate section, interposed between the root section and the tip section and a bearing cover, attached to the root section for shielding a gap between the wind turbine hub and the wind turbine blade in an assembled state of the wind turbine blade to the wind turbine hub. The bearing cover is fixed to the wind turbine blade by an adhesive layer of a first adhesive.

The wind turbine blade comprises three sections. The
three sections comprise the root section, the intermediate section and the tip section, wherein the longitudinal ends of the wind turbine blade are constituted by the root section and the tip section. Furthermore, the intermediate section is interposed between the root section and the tip section. Preferably, the three sections are interconnected seamlessly. It is preferred that the root section has a round cross-section, wherein the root section can be subjected to ovalization, e.g., during storage, handling, operation or the like. Further preferred, the longest part of the wind turbine blade is constituted by the intermediate section.

At the root section, preferably spaced apart from the longitudinal root end of the wind turbine blade, the bearing cover is provided. Preferably, the bearing cover has a connecting section for connecting the bearing cover to the root section and a shielding section for shielding the gap between the wind turbine hub and the wind turbine blade in the assembled state of the wind turbine blade to the wind turbine hub. Basically, the bearing cover can have a shape of a standard bearing cover, e.g., with an L-shaped cross-section. Moreover, the material of the bearing cover is preferably a common material for standard bearing covers, such as metal, plastic or the like. The bearing cover can consist of a plurality of bearing cover elements, put together to form the bearing cover. Preferably, adjacent bearing cover elements have an overlapping area to provide for a continuous shielding of the gap.

The bearing cover is fixed to the wind turbine blade by the adhesive layer of the first adhesive. A thickness of the adhesive layer is preferably between 1 mm and 10 mm. Preferably, the adhesive layer is configured to absorb shear stress, e.g., due to ovalization of the wind turbine blade. For this purpose, it is preferred that, in a cured state, the first adhesive still has a sufficient flexibility to follow the deformation of the wind turbine blade. Thus, the connection between the bearing cover and the wind turbine blade is resistant against standard ovalization of the wind turbine blade.

A wind turbine blade according to the invention has the advantage over conventional wind turbine blades that in a simple and inexpensive way, the bearing cover is fixed to the root section. Due to the adhesive layer of the first adhesive, the assembly of the bearing cover to the root section is improved. Moreover, by means of the adhesive layer, tolerances, especially due to ovalization of the wind turbine blade, can be better compensated than with standard fixation bolts or tensioning bands. Furthermore, no screw holes must be drilled into the root section, hampering the integrity of the root section. Thus, the lifetime of the wind turbine blade is increased compared to conventional wind turbine blades. Beyond that, with the adhesive layer, a seal is provided for protecting the gap from environmental influences and for preventing grease of the blade bearing from flowing away.

Preferably, the wind turbine blade comprises a plurality of bolts, fixed to the wind turbine blade by a second adhesive, wherein the bolts protrude into clearance holes of the bearing cover. Preferably, the chemical composition of the second adhesive is different from the chemical composition of the first adhesive. Alternatively or additionally, a plurality of retainer clips or the like can be provided at the wind turbine blade, fixed to the wind turbine blade by the second adhesive, wherein the retainer clips protrude into the clearance holes of the bearing cover. Further preferred, the cured second adhesive has a higher strength and/or greater hardness than the cured first adhesive. The bolts can be configured as steel bolts, plastic bolts or the like. Preferably, the bolts comprise a bolt head and a bolt shank, wherein the bolt head is fixed to the wind turbine blade and the bolt shank protrudes from the wind turbine blade into the clearance holes. Preferably, a surface of the bolts heads, facing the root section, matches the opposite surface of the root section to provide for a better bonding of the bolts to the root section. Preferably, the clearance holes have a larger diameter than the bolt shanks to provide for the possibility for a relative movement of the bolt shanks to the bearing cover. Further preferred, the bolt shanks are at least partly cut-off, e.g., for metal bolts, or broken-off, e.g., for plastic bolts. The bolts have the purpose of preliminarily fixing the bearing cover to the root section, e.g., in cooperation with nuts and preferably washers, until the first adhesive is fully cured. This has the advantage that in a simple and inexpensive way, the assembly of the bearing cover to the wind turbine blade is improved.

According to a preferred further development of the invention, a wind turbine blade can provide that the clearance holes of the bearing cover are configured as slotted holes. Within the scope of the invention, slotted holes are considered holes with a different length than width. Preferably, the width of the clearance holes equals the diameter of the bolt shanks. A lengthwise orientation of the slotted holes is, preferably, in circumferential direction of the wind turbine blade for better compensation of the ovalization of the wind turbine blade. This has the advantage that in a simple and inexpensive way, tolerances due to ovalization can be better compensated.

It is preferred according to the invention that the wind turbine blade comprises a plurality of 3D-shapes, preferably in the root section, wherein bolt heads of the bolts are arranged on or in the 3D-shapes. The 3D-shapes can be of various shapes, such as cylindrical, dome-shaped or the like. Preferably, the bolt heads have a matching shape to the 3D-shapes. Thus, a contact surface between the bolts and the root section can be increased and the stability of the connection between the bolts and the root section can be improved. Moreover, an alignment of these parts can be improved. It is further preferred that the 3D-shapes are designed for a reduced notch effect. Therefore, sharp angles are avoided and curves are preferred, e.g., at an edge between the root section surface and the 3D-shape. This has the advantage that in a simple and inexpensive way, the connection between the bolts and the root section can be improved.

More preferred, the bolt heads and the 3D-shapes have a flat surface. Preferably, the flat surface of the bolt head is a surface, facing away from the bold shank. The flat surface of the 3D-shape is the surface facing towards the flat surface of the bolt head. The flat surfaces are adhered together by the second adhesive. This has the advantage that in a simple and inexpensive way, the connection between the bolts and the root section can be improved.

In a particularly preferred embodiment of the invention, the second adhesive is a fast-curing adhesive. Preferably, the second adhesive is configured for faster curing than the first adhesive. Further preferred, the second adhesive is less elastic than the first adhesive. This has the advantage that in a simple and inexpensive way, the speed process of attaching the bolts to the root section can be increased.

Preferably, the clearance holes are filled with a
third adhesive. Within the scope of the invention, filling the clearance holes with the third adhesive means that the free volumes of the clearance holes, which are not occupied by the bolts, are fully or partly filled with the third adhesive. Further preferred, the third adhesive has the same chemical composition as the first adhesive. Preferably, the third adhesive has a different chemical composition than the second adhesive. Further preferred, the third adhesive has a higher flexibility than the second adhesive. This has the advantage that in a simple and inexpensive way, a protection from environmental influences is further improved.

According to a preferred embodiment of the invention, the adhesive layer of the first adhesive has a thickness and a flexibility to compensate ovalization of the wind turbine blade during handling, storing and operation of the wind turbine blade. The extent of ovalization of the wind turbine blade is dependent on the structure and material of the wind turbine blade. Therefore, the maximum extent of ovalization for the wind turbine blade is known. The thicker the adhesive layer, the less flexibility of the first adhesive is required for compensating the ovalization. This has the advantage that in a simple and inexpensive way, the stability and lifespan of the connection of the bearing cover to the root section is further increased.

According to a second aspect of the invention, the object is achieved by a method for manufacturing a wind turbine blade. The method comprises:
- Providing a wind turbine blade with a root section, an intermediate section and a tip section,
- fixing a plurality of bolts by their bolt heads to the root section with a second adhesive,
- arranging a bearing cover with clearance holes at the wind turbine blade such that the bolts protrude through the clearance holes,
- preliminarily fixing the bearing cover to the wind turbine blade by tightening nuts at the bolts,
- applying an adhesive layer of a first adhesive between the bearing cover and the wind turbine blade and
- curing the first adhesive.

It is preferred that the wind turbine blade is provided in a fully assembled state, e.g., with spacers, shear webs, spar caps, coatings, lightning protection or the like.

The bolts are fixed to the root section with the
second adhesive. Preferably, the bolts are fixed to the root section at predetermined locations. Further preferred, the bolts are fixed to the root section for protruding perpendicularly from the root section. The second adhesive can be applied to the predetermined locations of the root section and/or to the bolt heads. Preferably, the second adhesive is configured as a fast-curing adhesive. Preferably, the second adhesive is cured by a holding time, heat, UV-light or the like. UV-light is preferred when the second adhesive can be cured by UV-light and the bolts are manufactured of translucent plastic.

The bearing cover is arranged at the root section of the wind turbine. The bearing cover comprises a plurality of clearance holes. Preferably, the clearance holes are configured as slotted holes. By arranging the bearing cover at the root section, the bolt shanks are inserted into the clearance holes and protrude through the clearance holes. Between the bearing cover and the root section, a gap is provided. The gap can be provided, e.g., by bolt heads of the bolts.

Moreover, the bearing cover is preliminarily fixed to the wind turbine blade by tightening nuts at the bolts. Preferably, additional washers are used between the nuts and the bearing cover. Alternatively or additionally, nuts with an outer diameter significantly larger than the width of the clearance holes, e.g., comparable with the outer diameter of a standard washer, can be used.

When the bearing cover is secured to the root section, the adhesive layer of the first adhesive is applied between the bearing cover and the wind turbine blade. Furthermore, the first adhesive is cured. Thus, the bearing cover is adhered to the wind turbine blade. Preferably, a first adhesive is used, which has a different chemical composition than the second adhesive. It is preferred that the cured first adhesive has a higher flexibility than the cured second adhesive. Alternatively or additionally, the first adhesive can be applied to the root section and/or the bearing cover before the bearing cover is preliminarily fixed to the root section.

The method for manufacturing a wind turbine blade according to the invention has all the advantages that have already been described for a wind turbine blade according to the first aspect of the invention. Accordingly, the method for manufacturing a wind turbine blade according to the invention has the advantage over conventional methods for manufacturing a wind turbine blade that in a simple and inexpensive way, the bearing cover is fixed to the root section. Due to the adhesive layer of the first adhesive, the assembly of the bearing cover to the root section is improved. Moreover, by means of the adhesive layer, tolerances, especially due to ovalization of the wind turbine blade, can be better compensated than with standard fixation bolts or tensioning bands. Furthermore, no screw holes must be drilled into the root section, hampering the integrity of the root section. Thus, the lifetime of the wind turbine blade is increased compared to conventional wind turbine blades. Beyond that, with the adhesive layer, a seal is provided for protecting the gap from environmental influences and for preventing grease of the blade bearing from flowing away.

Particularly preferred, the nuts are removed after applying the adhesive layer. The nuts can be removed by unscrewing them with a tool, by pinching them off, cutting them off, e.g., by sawing, by grinding them or the like. This has the advantage that in a simple and inexpensive way, the compensation of the ovalization is improved and less stress is introduced into the bearing cover.

It is preferred according to the invention that a part of the bolts, protruding from the clearance holes, is removed after applying the adhesive layer. Preferably, by this process, the nuts are removed as well. The removing can be executed by pinching them off, cutting them off, e.g., by sawing, grinding them or the like. This has the advantage that in a simple and inexpensive way, the compensation of the ovalization is improved and less stress is introduced into the bearing cover.

Further preferred, the clearance holes are filled with a third adhesive. Within the scope of the invention, filling the clearance holes with the third adhesive means that the free volumes of the clearance holes, which are not occupied by the bolt, are fully or partly filled with the third adhesive. Further preferred, the third adhesive has the same chemical composition as the first adhesive. Preferably, the third adhesive has a different chemical composition than the second adhesive. Further preferred, the third adhesive has a higher flexibility than the second adhesive. This has the advantage that in a simple and inexpensive way, a protection from environmental influences is further improved.

Preferably, a plurality of 3D-shapes is manufactured to the wind turbine blade, wherein the bolt heads are arranged on or in the 3D-shapes and fixed to the 3D-shapes by the second adhesive. According to this, the 3D-shapes are manufactured to the root section of the wind turbine blade before the bolts are fixed to the root section. The 3D-shapes can be configured as recesses and/or protrusions. The 3D-shapes can be of various shapes, such as cylindrical, dome-shaped or the like. Preferably, the bolt heads have a matching shape to the recesses. Thus, a contact surface between the bolts and the root section can be increased and the stability of the connection between the bolts and the root section can be improved. Moreover, with such 3D-shapes, the alignment process of these parts can be improved. It is further preferred that the 3D-shapes are designed for a reduced notch effect. Therefore, sharp angles are avoided and curves are preferred, e.g., at an edge between the root section surface and the 3D-shape. More preferred, the bolt heads and the recesses have a flat surface. Preferably, the flat surface of the bolt head is a surface, facing away from the bold shank. The flat surface of the 3D-shape is the surface facing towards the flat surface of the bolt head. The flat surfaces are adhered together by the second adhesive. This has the advantage that in a simple and inexpensive way, the connection between the bolts and the root section can be improved.

Further preferred, the first adhesive is injected into a gap between the root section and the bearing cover. The gap can be provided by a spacer, the bolt head, the shape of the bearing cover or the like. Preferably, the injection of the first adhesive is performed with a dispense gun or the like. This has the advantage that in a simple and inexpensive way, the application of the first adhesive for constituting the adhesive layer is improved.

According to a third aspect of the invention, the object is achieved by a wind turbine. The wind turbine comprises a tower, a nacelle and a wind turbine hub. Moreover, the wind turbine comprises a wind turbine blade according to the invention, which is attached to the wind turbine hub. The wind turbine blade is attached to the wind turbine hub in a way that the gap between the root section and a hub housing of the wind turbine hub is shielded by the bearing cover of the wind turbine blade.

The wind turbine according to the invention has all the advantages that have already been described for a wind turbine blade according to the first aspect of the invention and for a method for manufacturing a wind turbine blade according to the second aspect of the invention. Accordingly, the wind turbine according to the invention has the advantage over conventional wind turbines that in a simple and inexpensive way, the bearing cover is fixed to the root section. Due to the adhesive layer of the first adhesive, the assembly of the bearing cover to the root section is improved. Moreover, by means of the adhesive layer, tolerances, especially due to ovalization of the wind turbine blade, can be better compensated than with standard fixation bolts or tensioning bands. Furthermore, no screw holes must be drilled into the root section, hampering the integrity of the root section. Thus, the lifetime of the wind turbine blade is increased compared to conventional wind turbine blades. Beyond that, with the adhesive layer, a seal is provided for protecting the gap from environmental influences and for preventing grease of the blade bearing from flowing away.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
- Figure 1: shows a schematic perspective view of a wind turbine according to a preferred embodiment of the invention,
- Figure 2: shows a schematic detail view of the wind turbine of fig. 1,
- Figure 3: shows a schematic detail view of a bearing cover, preliminarily fixed at a root section,
- Figure 4: shows a schematic detail view of the preliminarily fixation of the bearing cover to the root section, and
- Figure 5: shows a preferred embodiment of a method according to the invention in a schematic flow chart.

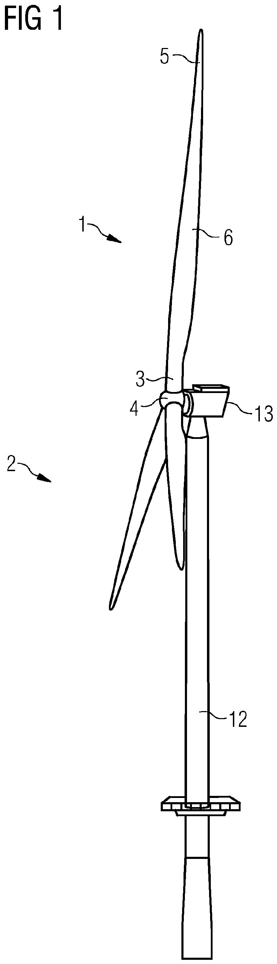

Elements with the same function and effectiveness are denoted each in figs. 1 - 5 with the same reference numbers.

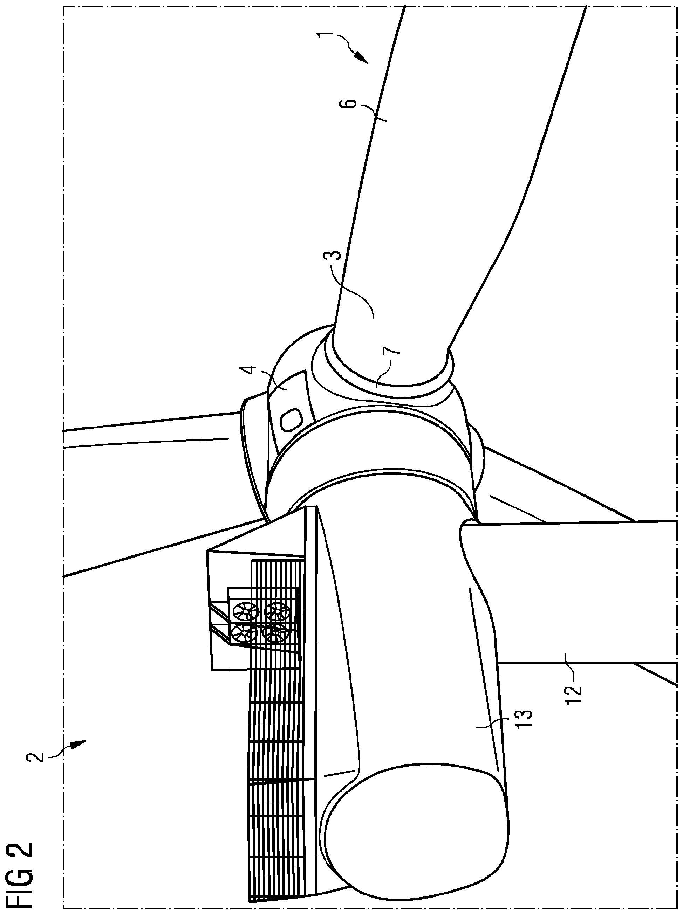

In fig. 1, a wind turbine 2 according to a preferred embodiment of the invention is shown in a schematic perspective view. Fig. 2 shows the wind turbine 2 in a schematic detail view. The wind turbine comprises a tower 12, a nacelle 13, mounted onto the tower 12 and a wind turbine hub 4, mounted to the nacelle 13. Three wind turbine blades 1 according to the invention are assembled to the wind turbine hub 4. Each wind turbine blade 1 comprises a root section 3, fixed to the wind turbine hub 4, a tip section 5, constituting a distal end of the wind turbine blade 1 and an intermediate section 6, arranged between the root section 3 and the tip section 5.

As shown in fig. 2, a bearing cover 7 is fixedly attached to the root section 3 of the wind turbine blade 1, shielding a not visible hub bearing of the wind turbine hub 4.

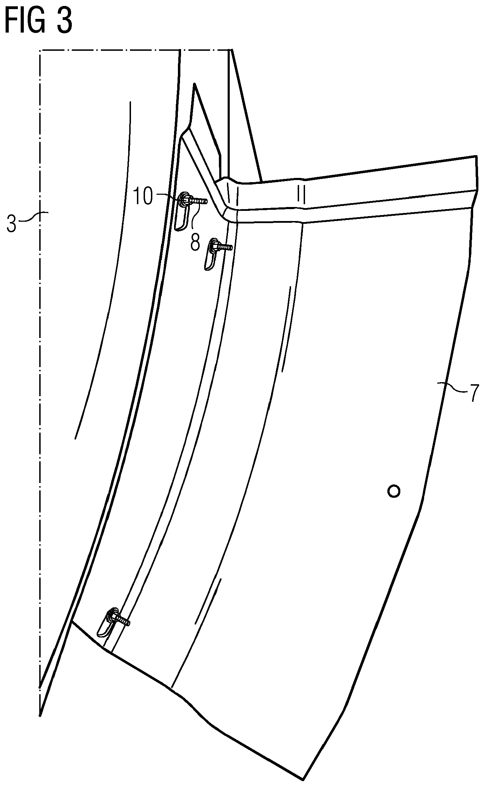

In fig. 3, a bearing cover 7, which is preliminarily fixed at a root section 3 of a wind turbine blade 1, is shown in a schematic detail view, wherein just a segment of the bearing cover 7 is shown.

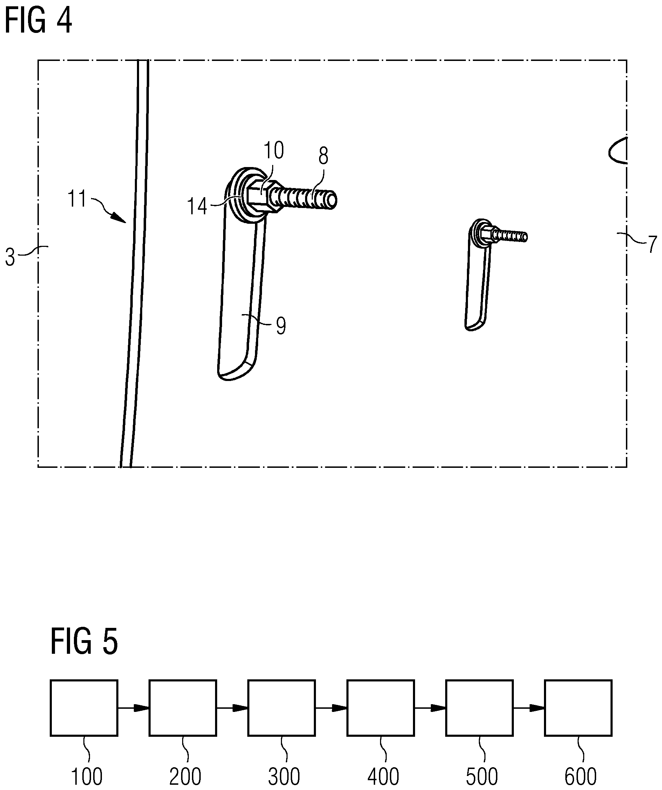

Fig. 4 shows the preliminary fixation of the bearing cover 7 to the root section 3 in another schematic detail view. A plurality of bolts 8 is adhered to the root section 3 by a second adhesive, thus protruding from the root section through clearance holes 9 of the bearing cover 7. To compensate for tolerances and ovalization of the wind turbine blade 1, the clearance holes 9 are configured as slotted holes. The bearing cover 7 is preliminarily fixed to the root section by washers 14 and nuts 10, tightened to the bolts 8. In this state, a gap 11 between the bearing cover 7 and the root section is provided for applying an adhesive layer of a first adhesive.

In fig. 5, a preferred embodiment of a method for manufacturing a wind turbine blade 1 according to the invention is shown in a schematic flow chart. In a first method action 100, a wind turbine blade 1 with a root section 3, an intermediate section 6 and a tip section 5 is provided, e.g., on a transport platform with a holding jig or the like. In a second method action 200, a plurality of bolts 8 are fixed with a second adhesive by their bolt heads to the root section 3. Thus, bolt shanks of the bolts 8 protrude outwards in a radial direction from the root section 3.

In a third method action 300, a bearing cover 7 with clearance holes 9 is arranged at the wind turbine blade 1 in a way that the bolts 8 protrude through the clearance holes 9. The bearing cover 7 can be provided as a plurality of bearing cover 7 segments. In a fourth method action 400, the bearing cover 7 is preliminarily fixed to the wind turbine blade 1 by tightening nuts 10 at the bolts. Thus, a gap 11 is constituted between the bearing cover 7 and the root section 3. In a fifth method action 500, an adhesive layer of a first adhesive is applied into the gap 11 between the bearing cover 7 and the wind turbine blade 1. Finally, in a sixth method action 600, the first adhesive is cured.

## Claims

1. Wind turbine blade (1) for a wind turbine (2), comprising a root section (3) for attaching the wind turbine blade (1) to a blade bearing of a wind turbine hub (4) of the wind turbine (2), a tip section (5), an intermediate section (6), interposed between the root section (3) and the tip section (5) and a bearing cover (7), attached to the root section (3) for shielding a gap between the wind turbine hub (4) and the wind turbine blade (1) in an assembled state of the wind turbine blade (1) to the wind turbine hub (4),
**characterized in**
**that** the bearing cover (7) is fixed to the wind turbine blade (1) by an adhesive layer of a first adhesive.

2. Wind turbine blade (1) according to claim 1,
**characterized in**
**that** the wind turbine blade (1) comprises a plurality of bolts (8), fixed to the wind turbine blade (1) by a second adhesive, wherein the bolts (8) protrude into clearance holes (9) of the bearing cover (7).

3. Wind turbine blade (1) according to claim 2,
**c h a r a c t e r i zed in**
that the clearance holes (9) of the bearing cover (7) are configured as slotted holes.

4. Wind turbine blade (1) according to claim 2 or 3,
**characterized in**
**that** the wind turbine blade (1) comprises a plurality of 3D-shapes, wherein bolt heads of the bolts (8) are arranged on or in the 3D-shapes.

5. Wind turbine blade (1) according to claim 4,
**characterized in**
**that** the bolt heads and the recesses have a flat surface.

6. Wind turbine blade (1) according to any of claims 2 - 5,
**characterized in**
**that** the second adhesive is a fast-curing adhesive.

7. Wind turbine blade (1) according to any of claims 2 - 6,
**characterized in**
**that** the clearance holes (9) are filled with a third adhesive.

8. Wind turbine blade (1) according to any of the previous claims,
**characterized in**
**that** the adhesive layer of the first adhesive has a thickness and a flexibility to compensate ovalization of the wind turbine blade (1) during handling, storing and operation of the wind turbine blade (1).

9. Method for manufacturing a wind turbine blade (1), comprising:
- Providing a wind turbine blade (1) with a root section (3), an intermediate section (6) and a tip section (5),
- fixing a plurality of bolts (8) by their bolt heads to the root section (3) with a second adhesive,
- arranging a bearing cover (7) with clearance holes (9) at the wind turbine blade (1) such that the bolts (8) protrude through the clearance holes (9),
- preliminarily fixing the bearing cover (7) to the wind turbine blade (1) by tightening nuts (10) at the bolts (8),
- applying an adhesive layer of a first adhesive between the bearing cover (7) and the wind turbine blade (1) and
- curing the first adhesive.

10. Method according to claim 9,
**characterized in**
**that** the nuts (10) are removed after applying the adhesive layer.

11. Method according to claim 9 or 10,
**characterized in**
**that** a part of the bolts (8), protruding from the clearance holes (9), is removed after applying the adhesive layer.

12. Method according to claim 11,
**characterized in**
**that** the clearance holes (9) are filled with a third adhesive.

13. Method according to any of claims 9 - 12,
**characterized in**
**that** a plurality of recesses is manufactured into the wind turbine blade (1), wherein the bolt heads are arranged in the recesses and fixed to the recesses by the second adhesive.

14. Method according to any of claims 9 - 13,
**characterized in**
**that** the first adhesive is injected into a gap (11) between the root section (3) and the bearing cover (7).

15. Wind turbine (2), comprising a tower (12), a nacelle (13) and a wind turbine hub (4),
**characterized in**
**that** a wind turbine blade (1) according to any of claims 1 - 8 is attached to the wind turbine hub (4).
